Europäisches Patentamt

European Patent Office

Office européen des brevets

(19)

(11) Veröffentlichungsnummer : **0 106 061**
**B1**

(12) **EUROPÄISCHE PATENTSCHRIFT**

(45) Veröffentlichungstag der Patentschrift :
30.09.87

(51) Int. Cl.⁴ : **B 23 K 13/02**

(21) Anmeldenummer : 83108040.3

(22) Anmeldetag : 13.08.83

(54) Verfahren zur Regelung des Schweissprozesses bei der Herstellung von Längsnahtrohren.

(30) Priorität : 20.10.82 DE 3238767

(43) Veröffentlichungstag der Anmeldung :
25.04.84 Patentblatt 84/17

(45) Bekanntmachung des Hinweises auf die Patenterteilung : 30.09.87 Patentblatt 87/40

(84) Benannte Vertragsstaaten :
AT BE CH DE FR GB IT LI NL SE

(56) Entgegenhaltungen :
DE-A- 2 626 986
DE-C- 2 850 978
US-A- 3 573 416
Patent Abstracts of Japan, Band 7, Nr. 63, 16. März
1983
"Soviet Inventions Illustrated", Week C30, 3 September 1980, Section M 23 x 24 P 55

(73) Patentinhaber : Hoesch Aktiengesellschaft
Eberhardstrasse 12
D-4600 Dortmund 1 (DE)

(72) Erfinder : Koch, Friedrich Otto, Dipl.-Ing.
Auf der Bleiche 44
D-4750 Unna-Massen (DE)
Erfinder : Retzlaff, Friedhelm
Wilhelm-Busch-Ring 8
D-4618 Kamen-Methler (DE)
Erfinder : Wahl, Hans Jürgen, Dipl.-Phys.
Breul 16a
D-4400 Münster (DE)

## Beschreibung

Die Erfindung betrifft ein Verfahren gemäß dem Oberbegriff des Patentanspruches.

Die Erfindung geht aus von der US-A- 35 73 416, aus der bekannt ist, den Schweißdruck und die zugeführte elektrische Energie zu messen und zu regeln.

Nachteilig ist bei diesem Verfahren, daß der Schweißdruck nicht in Abhängigkeit von seinem Ergebnis — dem gebildeten Schweißwulstvolumen — erfaßt wird.

Eine derartige Möglichkeit soll gemäß der DE-C- 28 50 978 die Schweißwulstbreitenmessung direkt hinter dem Schweißpunkt sein. Hierbei wurde unterstellt, daß das Schweißwulstvolumen proportional zur Schweißwulstbreite ist, die mit einer Diodenzeilen-Kamera berührungslos meßbar ist. Weiterhin zeigt diese Veröffentlichung eine Ausführungsvariante bekannter Regelkreise zur Leistungsregelung einer HF-Schweißanlage durch Verknüpfung der Temperatur- und Breitenmeßergebnisse des Schweißwulstes.

Das dargestellte Verfahren ist jedoch aufwendig und ungenau, weil sich kurz hinter dem Schweißpunkt noch keine größere Schweißwulstbreite ausgebildet hat, weil das flüssige Material danach erst in die Breite fließt. Eine Breitenmessung vorzunehmen, nachdem das Material erstarrt ist, ist für die momentane Bildung von Regelgrößen nicht geeignet, da das Meßergebnis dann zu spät in die Regeleinrichtung einfließt.

Dieser Nachteil besteht auch bei einer weit hinter dem Schweißpunkt am erstarrten Material vorgenommenen Höhenmessung, wie er in der JP-A- 57- 206581 vorgeschlagen wurde.

Aus der DE-A- 28 26 986 ist ferner bekannt, daß der Schweißwulst beim Hochfrequenzschweißen aus einer Kette von unregelmäßigen aneinandergereihten Tropfen besteht, deren Volumen starken Schwankungen unterliegt, weshalb aus diesem eine Regelgröße nicht unmittelbar abgeleitet werden kann.

Es ist die Aufgabe der Erfindung, ein Verfahren zum genauen und schnellen Regeln des Schweißprozesses bei der Herstellung von Längsnahtrohren durch Hochfrequenzschweißen anzugeben, dessen Regelgrößen aus optisch meßbaren geometrischen Abmessungen des Schweißwulstes dicht hinter dem Schweißpunkt gewonnen werden.

Diese Aufgabe wird erfindungsgemäß gelöst durch die im Kennzeichen des Anspruches erfaßten Merkmale.

Der Erfindung liegt die Erkenntnis zugrunde, daß die primäre Ausbreitungsrichtung des Schweißwulstes unmittelbar hinter dem Schweißpunkt senkrecht zur Rohroberfläche, d. h. in Bandkantenebene verläuft, da hier bei der plötzlichen Zusammenfügung der Bandkanten das flüssige Material nach oben und unten aus der Nahtfuge gedrückt wird und erst bei Kühlung erstarrt.

Aus diesem Grunde ist die Schweißwulsthöhe in erster Näherung ein Indiz für den herrschenden Schweißdruck, bei kontrollierter und geregelter Schweißtemperatur sowie bekannten Wanddicken-/Rohrdurchmesserverhältnissen.

Die Schweißwulsthöhe in jedem Augenblick der Schweißung reicht jedoch als Regelparameter nicht aus und der Schweißdruck ist auch bei den üblichen hohen Schweißgeschwindigkeiten nicht mit der gleichen Frequenz der Höhenänderung regelbar.

Daher ist die Schweißwulsthöhe über eine der Mindestansprechzeit des Regelkreises entsprechende Schweißnahtlänge zu mitteln und der Mittelwert zur Regelung heranzuziehen.

Die Erfindung soll anhand einer schematischen, einen Schweißnahtabschnitt im Querschnitt stark vergrößert wiedergebende Darstellung erläutert werden.

Die Bandkanten 1 und 2 eines zum Schlitzrohr geformten Bandes sind durch eine nicht dargestellte Hochfrequenz-Schweißvorrichtung erhitzt und zusammengepreßt worden. Die wärmebeeinflußten Zonen 3 werden dabei gering verdickt, während das flüssige Material 4 aus der Nahtfuge zu einem Schweißwulst 5 gepreßt wird. Der Schweißwulst 5 besteht aus einer Vielzahl nacheinander aus der Nahtfuge gedrückter, in der Höhe variabler « Tropfen » 6.

Eine nicht gezeigte Kamera mit Optik 7 und Diodenzeilen 8 ausgestattet, mißt die Höhe × jeden Tropfens 6. Die Höhe der Tropfen 6 wird über einen Meßzeitraum von beispielsweise 0,5 Sekunden gemittelt und als Maß für den Stauchdruck gewertet.

Eine eventuell auftretende Sollwertabweichung kann über einen üblichen, nicht dargestellten Regelkreis in Koordination mit der gemessenen Schweißtemperatur, Schweißenergie und Rohrgeometrie zur Regelung des Schweißprozesses herangezogen werden.

Für die Optik 7 dient der Schweißwulst wegen seiner hohen Temperatur als Strahlungsquelle.

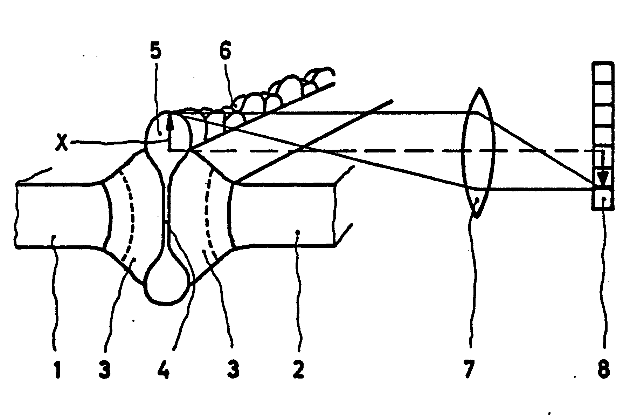

## Patentanspruch

Verfahren zum Regeln des Schweißprozesses bei der Herstellung von Längsnahtrohren durch Hochfrequenzschweißen eines kontinuierlich zu einem Schlitzrohr geformten Bandes, bei dem die zugeführte elektrische Energie, der Schweißdruck, mit dem die Bandkanten zusammengepreßt werden und die Schweißtemperatur auf einen vorgegebenen Wert innerhalb des Arbeitsbereiches, in dem eine hinreichende Nahtbildung erfolgt, geregelt werden, dadurch gekennzeichnet, daß der Schweißdruck in Abhängigkeit von dem kontinuierlich unmittelbar hinter dem Schweißpunkt berührungslos gemessenen Volumen des Schweißwulstes geregelt wird, wobei das Volumen durch eine Absolut-Höhenmessung des Schweißwulstes bestimmt wird und die variable Schweißwulsthöhe abschnittsweise rechnerisch gemittelt, mit einem vorgegebenen Sollwert verglichen und bei Abweichungen hier von der Schweißdruck geändert wird.

**Claim**

Method for regulating the welding process in the manufacture of longitudinally-seamed tubes by high-frequency welding of a strip continuously formed into a slit tube, in which the electrical energy supplied, the welding pressure with which the edges of the strip are pressed together and the welding temperature are regulated at a predetermined value within the operating range in which satisfactory formation of a welded seam results, characterised in that the welding pressure is regulated in dependence upon the volume of the weld bead contactlessly measured continuously directly behind the welding point, the volume being determined by an absolute height measurement of the weld bead, and the variable weld bead height computed in sections is compared with a predetermined ideal value and the welding pressure is altered on variation therefrom.

**Revendication**

Procédé en vue de régler le processus de soudage, lors de la fabrication de tubes à cordon de soudure longitudinal par soudage à haute fréquence d'une bande formée continuellement en un tube fendu, procédé dans lequel l'apport d'énergie électrique, la pression de soudage avec laquelle les bords de la bande sont pressés ensemble, de même que la température de soudage sont réglés à une valeur prédéterminée dans l'intervalle de travail, dans lequel on obtient une formation suffisante du cordon de soudure, caractérisé en ce que la pression de soudage est réglée en fonction du volume du bourrelet de soudage, qui est mesuré continuellement sans contact, directement derrière le joint de soudure, le volume étant déterminé par une mesure absolue de la hauteur du bourrelet de soudage, et la moyenne de la hauteur variable du bourrelet de soudage étant déterminée section par section par calcul, et comparée à une valeur théorique prédéterminée, la pression de soudage étant modifiée en cas d'écarts avec cette valeur théorique.